# EUROPEAN PATENT APPLICATION

(11) **EP 4 763 620 A1**
(43) Date of publication of application: **24.06.2026**
(21) Application number: 24220673.8
(22) Date of filing: 17.12.2024
(51) Int. Cl.: B60Q 1/32

(54) **LOGO LAMP ASSEMBLY FOR A VEHICLE AND VEHICLE COMPRISING SUCH AN ASSEMBLY**

(71) Applicant: Motherson Innovations Deutschland GmbH, 70327 Stuttgart (DE)
(72) Inventor: Murray, Andrew, Seaford, SA 5169 (AU); Herrmann, Andreas, 71364 Winnenden (DE); Singh, Surya, 201304 Noida (IN)

(57) **Abstract**

The disclosure relates to a logo lamp assembly (1) for a vehicle comprising a first lamp (2) configured to generate at least one first light pattern (L1) and a second lamp (3) configured to generate at least one second light pattern (L2). The first lamp (2) and second lamp (3) are arranged and configured such that the generate first and light patterns (L1, L2) are generating together a continuous third pattern (L3) and the first and second light patterns (L1, L2) are generated independent of each other.

## Description

The present disclosure relates to a logo lamp assembly for a vehicle. Further, the present disclosure relates to a vehicle with such a logo lamp assembly.

Logo lamp assemblies have become a quasi-standard in modem vehicles. Typical logo lamp assemblies have been used not only as a welcome sign for a driver, but also to improve security e.g. while entering or exiting a vehicle by projecting an aesthetically pleasing logo adjacent to the vehicle. Therefore, logo lamp assemblies must be capable of performing a variety of functions.

However, image output of logo lamps is limited in their added values and often it is observed that the light outputs from two different sources from the logo lamps tends to overlap and are dependent to each other.

US 2023 0316959 A1 discloses a logo lamp assembly comprising at least one first logo lamp assembly having fixed image output as light projection and at least one second logo lamp having at least partially animated image output as light projection. The second logo lamp is configured to be controlled in such a way that it is dependent on at least one of the fixed image outputs.

Against this background, the object of the invention is to provide an improved logo lamp assembly, in particular where a light pattern or a homogeneous light projections are generated which are independent from one another on the ground near the vehicle.

This object is accomplished according to the present disclosure by a logo lamp assembly having the features of claim 1. Accordingly, there is provided a logo lamp assembly for a vehicle, the logo lamp assembly comprising a first lamp configured to generate at least one first light pattern and a second lamp configured to generate at least one second light pattern. The first lamp and second lamp are arranged and configured such that the generate first and light patterns are generating together a continuous third pattern, wherein the first and second light patterns are generated independent of each other.

In an embodiment, the first lamp and second lamp are arranged and configured such that the generated continuous third pattern may provide at least two different images and/ or at least one continuous image.

Since the light patterns are not dependent on each other, various additional information can be used to project using the present logo system in the vehicle. The logo may be of two separate information or a continuous information. The images patterns may have no overlap, contain distinct individual information or patterns, and may be activated simultaneously, independently or in sequence.

In an embodiment, the first lamp may be configured to project the first light pattern along a first projection axis and the second lamp may be configured to project the second light pattern along a second projection axis. The second projection axis may be configured to be inclined at an acute angle with the first projection axis.

In an embodiment, the second light pattern may be configured to cover a greater area than the first light pattern.

In an embodiment, the logo lamp assembly comprises a mounting interface. The mounting interface may be configured to be detachably attach the logo lamp assembly to at least one vehicle component. The at least one vehicle component may be selected from a group consisting of a rear view device, a side mirror, a door, a camera pod, a trunk lid, a spoiler, a hood, a bumper, a side skirt, a roof rail, a pillar, and a fender.

The first lamp may comprise a first image mask to generate the first light pattern, and the second lamp comprises a second image mask configured to generate the second light pattern.

In an embodiment, the logo lamp assembly may comprise at least one connector for connecting the logo lamp assembly with a power supply and/ or a control unit.

In an embodiment, the first light pattern and the second light pattern may be configured to be colorful based on the color combinations of at least partially colored yellow, red, amber, blue, grey, black or any other color.

In an embodiment, the first lamp and the second lamp or the logo lamp assembly may include at least one lens. The at least one lens may be at least partially colored white, grey, black, yellow, red, amber, blue or any other color or any combination thereof.

The present logo lamp assembly can improve animated image output for a vehicle. The logo lamp assembly meet individual situations in which areas outside or inside a vehicle is relevant. The assembly may illuminate exterior or interior panels of the car, fuel/charging port, footwell, instrument panel, seat, roof lining, control surfaces.

The present disclosure is also related to a vehicle with at least one logo lamp assembly as described above.

The light patterns may work together to create a paved effect pattern or theme or may contain different images, patterns or information. This may provide illumination to aid visibility around the vehicle and opportunities to convey information. A large area may be illuminated around the vehicle with a clear vision of the ground adjacent to the vehicle and also while approaching the vehicle to enter and exiting the vehicle.

It should be noted that the features set out individually in the following description can be combined with each other in any technically advantageous manner and set out other forms of the present disclosure. It should be understood, however, that the disclosure is not limited to the precise arrangements and instrumentalities shown. The accompanying drawings, which are incorporated in and constitute a part of this specification, illustrate an implementation of system, apparatuses, and methods consistent with the present description and, together with the description, serve to explain advantages and principles consistent with the disclosure. The figures are not necessarily drawn to scale. Like numbers used in the figures refer to like components. However, it will be understood that the use of a number to refer to a component in a given figure is not intended to limit the component in another figure labelled with the same number. The description further characterizes and specifies the present disclosure in particular in connection with the Figures.

The present disclosure is described in detail with reference to the drawings attached wherein:
Figure 1 illustrates a schematic view of a logo lamp assembly in an aspect of the present disclosure;
Figure 2 illustrates a schematic view of the logo lamp assembly of Figure 1 including example of image patterns;
Figure 3 illustrates a schematic illustration of the logo lamp assembly mounted on the vehicle in an aspect of the present disclosure;
Figure 4 illustrates a schematic view of a logo lamp assembly in a further aspect of the present disclosure; and
Figure 5 illustrates a schematic view of a logo lamp assembly of Figure 4 including example of image patterns.

The foregoing objects, features and advantages of the present disclosure will become more apparent from the following detailed description related to the accompanying drawings. However, various modifications may be applied to the present disclosure, and the present disclosure may have various embodiments of the present disclosure. Hereinafter, specific embodiments of the present disclosure, which are illustrated in the drawings, will be described in detail.

In the following description, for purposes of explanation, numerous specific details are set forth in order to provide a thorough understanding of the present disclosure. It will be apparent, however, to one skilled in the art that the present disclosure can be practiced without these specific details. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

Reference in this specification to "one embodiment" or "an embodiment" means that a particular feature, structure, or characteristic described in connection with the embodiment is included in at least one embodiment of the present disclosure. The appearances of the phrase "in an embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not for other embodiments.

Moreover, although the following description contains many specifics for the purposes of illustration, anyone skilled in the art will appreciate that many variations and/or alterations to said details are within the scope of the present disclosure. Similarly, although many of the features of the present disclosure are described in terms of each other, or in conjunction with each other, one skilled in the art will appreciate that many of these features can be provided independently of other features. Accordingly, this description of the present disclosure is set forth without any loss of generality to, and without imposing limitations upon, the present disclosure.

In the drawings, the thicknesses of layers and regions may be exaggerated for clarity. When it is indicated that an element or layer is "on" or "above" another element or layer, this comprises a case in which another layer or element is interposed therebetween as well as a case in which the element or layer is directly above the other element or layer. In principle, reference signs designate elements throughout the specification. In the following description, the same reference signs are used to designate elements, which have the same function within the same idea illustrated in the drawings of each embodiment of the present disclosure.

When detailed description of known functions or configurations related to the present disclosure is deemed to unnecessarily blur the gist of the disclosure, the detailed description thereof will be omitted. Also, numerals (e.g., first, second, etc.) used in the description herein are merely identifiers for distinguishing one element from another element.

In addition, the terms "module" and "unit" used to refer to elements in the following description are given or used in combination only in consideration of ease of writing the specification, and the terms themselves do not have distinct meanings or roles.

Furthermore, the use of a singular term, such as, "a" is not to be interpreted as limiting the number of components or details of particular components. Additionally, various terms and/or phrases describing or indicating a position or directional reference such as, but not limited to, "top", "bottom", "front", "rear", "forward", "rearward", "end", "outer", "inner", "left", "right", "vertical", "horizontal", etc. may relate to one or more particular components as seen generally from a user's vantage point during use or operation, and such terms and/or phrases are not to be interpreted as limiting, but merely as a representative basis for describing the disclosure to one skilled in the art. In addition, a suffix "region", "part", "unit" for a component used in the following description are given or mixed in consideration of only the ease of writing the specification, and do not have meanings or roles distinguished from each other.

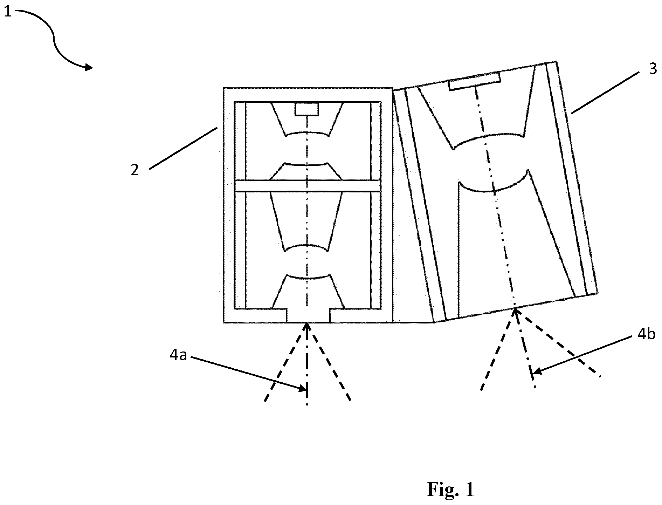

The present disclosure as sketched in Figures 1 to 5 provides a logo lamp assembly 1 for a vehicle 5 comprising a first lamp 2 configured to generate at least one first light pattern L1, and a second lamp 3 configured to generate at least one second light pattern L2. The first light pattern L1 and the at least one second light pattern L2 are further configured to generate a continuous third pattern L3 and the first and second light patterns L1, L2 are generated by the first lamp 2 and second lamp 3 independent of each other.

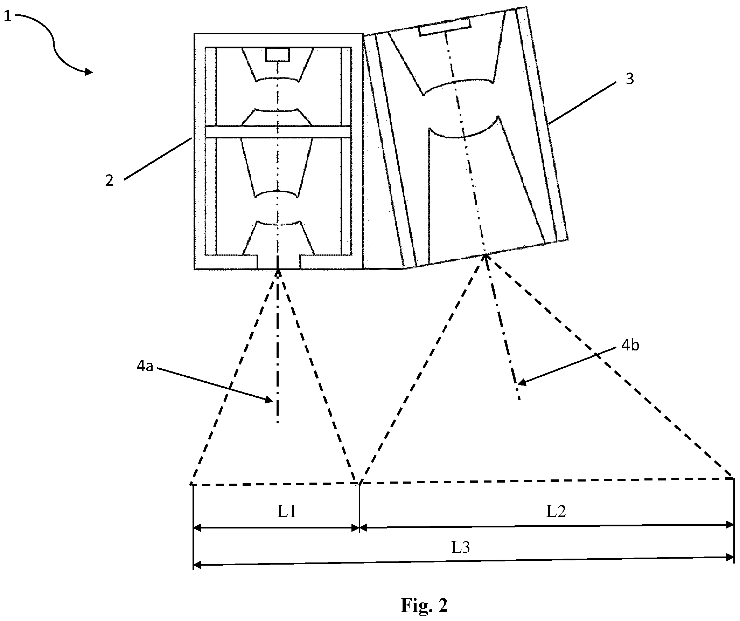

Referring to embodiments of Figures 1 and 2, a logo lamp assembly 1 is disclosed for illuminating areas outside a vehicle 5. The arrangement of the logo lamp assembly 1 as well as the comprised logo lamps may be varied such that the image output may also illuminate areas of the interior of the vehicle 5. However, in the following description, the logo lamp assembly 1 is chosen so that illumination is only projected outside the vehicle 5. The chosen image outputs are simplified. Thus, the image output of the logo lamps may have any shape, e.g. circular, rectangular, etc., and depict any desired image as a logo.

Figure 1 shows an embodiment of the logo lamp assembly 1 that comprises a first lamp 2 and a second lamp 3 which may be capable of projecting an image output. The image output may be in a form of a pattern that may be required.

Based on the arrangement according to the embodiment of Figure 1, a combination of both image outputs (simultaneous projection) or a sequential projection is possible, wherein the first lamp 2 may project at least one first light pattern L1 such as a representation of a vehicle or a logo as the basic image and the second lamp 3 may project at least one second light pattern L2 (as illustrated in Figure 2).

Figure 2 shows an example of light patterns of the logo lamp assembly 1 of Figure 1. The at least one first light pattern L1 of the first lamp 2 and the at least one second light pattern L2 of the second lamp 3 may be configured to be placed adjacent to each other such that the projected light patterns do not overlap. Due to the arrangement of the first lamp 2 and the second lamp 3, the first and second projection axes 4a and 4b of the first and second lamp 2, 3, respectively, may be configured to be in acute angle with each other.

In an embodiment, a combination of both the at least a first and second light patterns L1, L2 may be configured to be independent of each other. In embodiments, several first and/or second lamps 2, 3 can be arranged within one logo lamp assembly 1. Due to the placements of the at least first and second lamps 2, 3 in the logo lamp assembly 1, the first projection axis 4a of the first lamp 2 such that the first and second projection axes 4a, 4b do not intersect with each other in the direction of light projection.

In an embodiment, the combination of the at least first light pattern L1 and the at least second light pattern L2 may be configured to be projected to form a third pattern as one continuous pattern L3. The third pattern L3 may be a logo formed partially by the at least one first light pattern L1 and partially by the at least one second light pattern L2. In an embodiment, the second light pattern L2 may be configured to cover greater area than the first light pattern L1.

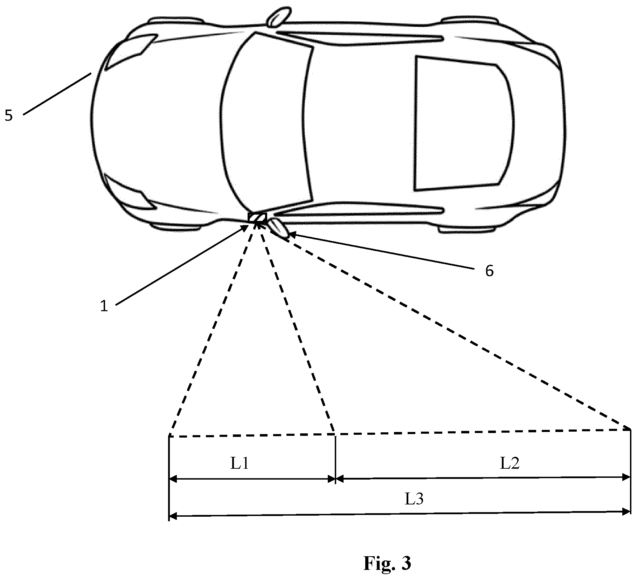

The logo lamp assembly 1 as illustrated in Figure 3 may be mounted on the vehicle 5 close to a rear view device 6. In other embodiments, the logo lamp assembly 1 may be mounted elsewhere on the vehicle 5, in particular on any vehicle components such as a door, a camera pod, a trunk lid, a spoiler, a hood, a bumper, a side skirt, a roof rail, a pillar or a fender.

In an embodiment, the first lamp 2 may comprise a first image mask to generate the first light pattern L1, and second lamp 3 may comprise a second image mask configured to generate the second light pattern L2. The combination of the first light pattern L1 and the second light pattern L2 may be represented as a different pattern and/ or a continuous third pattern L3.

The first pattern L1 and the second pattern L2 may be a text. Preferably, L1 and L2 may be a brand logo, a car logo, a vehicle representation, a message logo on/for the driver (policeman, fireman, taxi driver or the like) and/or any traffic related logo like a traffic sign and/or a combination of letters or the like is projected. According to other embodiments, a combination of these logos may be projected. For example, at least one first lamp 2 may project a representation of a vehicle 5, wherein at least one second lamp 3 may be adapted to project a text, moving animation and/or a moving brand logo. The first lamp 2 and the second lamp 3 or the logo lamp assembly may include a lens.

In an embodiment, the lenses in the first lamp 2 may be configured in such a way that the first light pattern L1 covers a narrow area range. Further, the lenses of the second lamp may be configured to project the second light pattern L2 in much broader area range as compared to the first light pattern L1.

In an embodiment, the first light pattern L1 and the second light pattern L2 may be configured to be colorful based on the color combinations of at least partially colored yellow, red, amber, blue, grey, black or any other color.

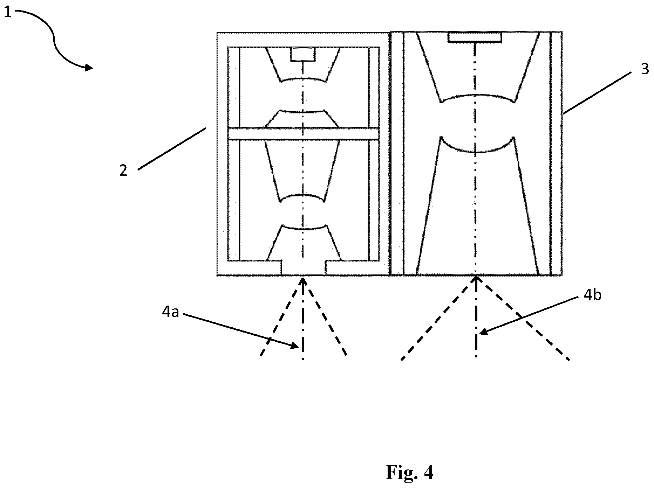

Figure 4 shows another embodiment of the logo lamp assembly 1 as illustrated in Figure 1. The logo lamp assembly 1 in Figure 4 may comprise the at least first lamp 2 and the at least second lamp. In an embodiment, the at least first lamp 2 may be configured to project the first light pattern L1 along a first projection axis 4a and the at least second lamp 3 is configured to project the second light pattern L2 along a second projection axis 4b. In an embodiment, the second projection axis 4b may be configured to be coaxial with the first projection axis 4a. The second light pattern L2 is further configured to cover a greater projected area than the first light pattern L1.

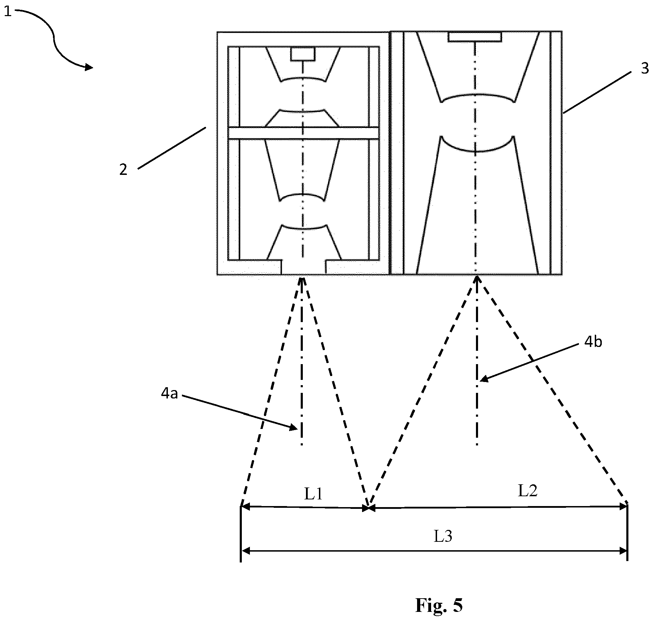

Figure 5 shows an example of light patterns of the logo lamp assembly 1 of Figure 4. The at least first light pattern L1 of the first lamp 2 and the at least second light pattern L2 of the second lamp 3 may be configured to be adjacent to each other such that the projected light patterns do not overlap. Due to the arrangement of the first lamp 2 and the second lamp 3, the first and second projection axes 4a and 4b of the first and second lamp 2, 3 respectively may be configured to be parallel with each other.

In an embodiment, lenses in the first lamp 2 may be configured in such a way that the light pattern L1 may cover a small area and the lenses in the second lamp 3 may be configured to obtain a larger area as compared to the first light pattern L1 as illustrated in Figure 5. The positions of the first lamp 2 and the second lamp 3 may be interchanged to obtain different forms and types of light patterns.

In an embodiment, a combination of both the at least a first and second patterns L1, L2 may be configured to be independent of each other.

In an embodiment, the combination of the at least first light pattern L1 and the at least second light pattern L2 may be configured to be projected to form a third pattern as one continuous pattern L3. The continuous third pattern L3 may comprise at least two different images and/ or at least one continuous image.

Although the subject matter of the present disclosure has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims, i.e. the features disclosed in the foregoing description, the claims, and the drawings may be essential, both individually and in any combination, for accomplishing the present disclosure in its various embodiments. The embodiments shown herein are only examples of the present disclosure and must therefore not be understood as being restrictive. Alternative embodiments considered by the skilled person are equally covered by the scope of protection of the present disclosure.

### REFERENCE SIGNS LIST

- 1: logo lamp assembly
- 2: first lamp
- 3: second lamp
- 4a: first projection axis
- 4b: second projection axis
- 5: vehicle
- 6: rear view device
- L1: first light pattern
- L2: second light pattern
- L3: third pattern

## Claims

1. A logo lamp assembly (1) for a vehicle (5), the logo lamp assembly (1) comprising:
a first lamp (2) configured to generate at least one first light pattern (L1);
a second lamp (3) configured to generate at least one second light pattern (L2);
wherein the first lamp (2) and second lamp (3) are arranged and configured such that the first and second light patterns (L1, L2) are generating together a continuous third pattern (L3) and wherein the first and second light patterns (L1, L2) are generated independent of each other.

2. The logo lamp assembly according to claim 1, wherein the first lamp (2) and second lamp (3) are arranged and configured such that the generated continuous third pattern (L3) provides at least two different images.

3. The logo lamp assembly according to claim 1, wherein the first lamp (2) and second lamp (3) are arranged and configured such that the generated continuous third pattern (L3) provides at least one continuous image.

4. The logo lamp assembly according to any of the preceding claims, wherein the first lamp (2) is configured to project the first light pattern (L1) along a first projection axis (4a) and wherein the second lamp (3) is configured to project the second light pattern (L2) along a second projection axis (4b), and wherein the second projection axis (4b) is configured to be inclined at an acute angle with the first projection axis (4a).

5. The logo lamp assembly according to any of the preceding claims, wherein the second light pattern (L2) is configured to cover a greater area than the first light pattern (L1).

6. The logo lamp assembly according to any of the preceding claims, wherein the logo lamp assembly (1) comprises a mounting interface, wherein the mounting interface is configured to be detachably attach the logo lamp assembly (1) to at least one vehicle component.

7. The logo lamp assembly according to claim 6, wherein the at least one vehicle component is selected from a group consisting of a rear view device, a side mirror, a door, a camera pod, a trunk lid, a spoiler, a hood, a bumper, a side skirt, a roof rail, a pillar, and a fender.

8. The logo lamp assembly according to any of the preceding claims, wherein the first lamp (2) comprises a first image mask to generate the first light pattern (L1), and/or the second lamp (3) comprises a second image mask configured to generate the second light pattern (L2).

9. The logo lamp assembly according to any of the preceding claims, further comprising at least one connector for connecting the logo lamp assembly (1) with a power supply and/ or a control unit.

10. The logo lamp assembly according to any of the preceding claims, wherein the first light pattern (L1) and the second light pattern (L2) are configured to be colorful based on color combinations of at least partially colored yellow, red, amber, blue, grey, black or any other color.

11. The logo lamp assembly according to any of the preceding claims, wherein at least one of the first lamp (2) and the second lamp (3) or the logo lamp assembly (1) include at least one lens.

12. The logo lamp assembly according to claim 11, wherein the at least one lens is at least partially colored white, grey, black, yellow, red, amber, blue or any other color or any combination thereof.

13. A vehicle (5) comprising at least one logo lamp assembly (1) according to any of the preceding claims.
